# EUROPEAN PATENT APPLICATION

(11) **EP 2 104 313 A1**
(43) Date of publication of application: **23.09.2009**
(21) Application number: 08251023.1
(22) Date of filing: 20.03.2008
(51) Int. Cl.: H04L 29/08, G06F 9/445

(54) **Method and apparatus for processing delivery of software items**

(71) Applicant: British Telecommunications Public Limited Company, London EC1A 7AJ (GB)
(72) Inventor: The designation of the inventor has not yet been filed
(74) Representative: Roberts, Simon Christopher

(57) **Abstract**

A method of processing delivery of a software item to a user device (2) being sent the software item, the method comprising the steps of:
a) maintaining a list of capabilities of a user device (2) at a server (4,20) remote from the user device (2);
b) upon receiving a request from a requestor to deliver a software item to the user device (2) interrogating the server (4,20) to see if the user device (2) is currently capable of processing the software item; and
c) if the user device (2) is not capable of processing the software item informing the user device (2) that a software item that it cannot process is waiting or was requested to be delivered to it.

## Description

### FIELD OF THE INVENTION

The present invention relates to a method of and apparatus for delivering software items.

### BACKGROUND OF THE INVENTION

Mobile computing devices such as mobile phones, PDAs or ultra portable PCs are capable of receiving messages, playing multimedia content, and opening applications in order that they can display or process data which had been created using a software application. The constant development in the field of software means that from time to time patches, upgrades or other enhancements become available for applications or, indeed, new applications are launched. The mobile device may make periodic connections to a server hosting an upgrade service, using a suitable communication scheme, in order to query the server to see whether new patches, upgrades or applications have been released. If such a patch, modification, or upgrade has been released then the software components running on the mobile device can be installed, for example by active synchronisation, and the device configuration file can be updated. Typically such patches and upgrades are made on the basis of the availability of the new component. As a consequence, the software client on the mobile device updates itself whether it needs the new functionality or not. This can result in a larger then necessary software client existing on what is typically a resource constrained mobile device. Thus the client footprint can become unnecessarily heavy.

Another approach to overcoming the problems of displaying data is the use of the browser plug-ins. Here when a user browses to a URL that the current internet browser cannot render they are given the option of downloading a plug-in. Sometimes the plug-in installs effortlessly and the user can view or experience the new content. Sometimes the plug-in experience requires user intervention and the user then has to manually find the original website.

### SUMMARY OF THE INVENTION

According to the present invention there is defined a method of upgrading software as defined in claim 1.

According to a second aspect of the present invention there is provided an apparatus for upgrading a mobile device as defined in claim 9.

### BRIEF DESCRIPTION OF THE FIGURES

The present invention will further be described, by way of example only, with reference to the accompanying drawing, in which:

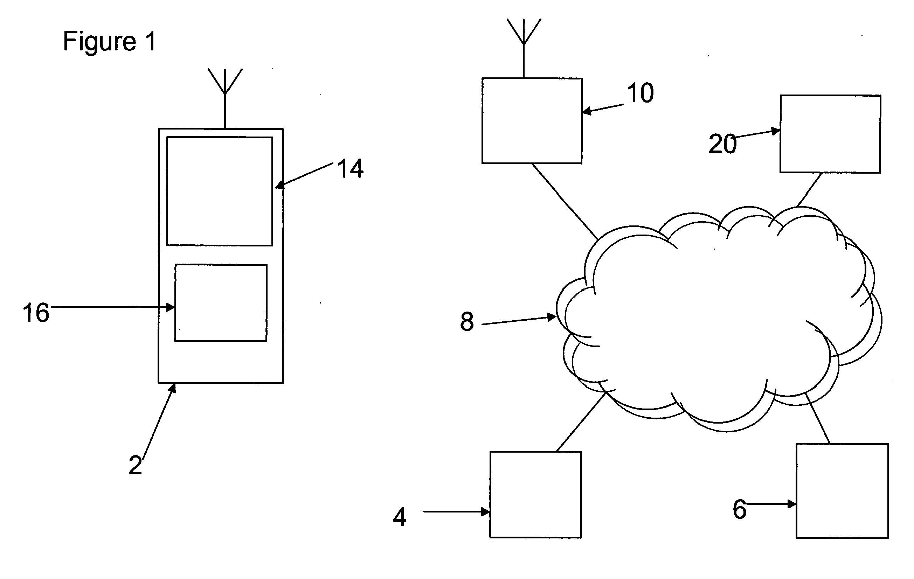

Figure 1 schematically illustrates a mobile computing device in communication with a data system via a mobile telephony network.

### DESCRIPTION OF EMBODIMENTS OF THE INVENTION

Figure 1 schematically illustrates a system in which a mobile device 2, which may be a mobile phone, a PDA or a PC can connect with a data communications network, such as servers 4 and 6 via the internet 8 and a mobile communications network schematically represented as item 10. The mobile device typically has a display 14 for displaying images, a keyboard region 16 (which may be formed of soft keys shown on the display) together with an audio interface (not shown) in the form of a loudspeaker and a microphone.

There is a continual pressure on mobile device manufacturers to keep the weight and size of the device down and consequently the onboard processor and memory in the mobile device are typically significantly more constrained in power and size than would be found on a desktop computing device.

The mobile computing device 2 may run one or more software clients in order to deliver specific functionality to a user. The software clients can communicate with the servers 4 and 6 and the internet 8 by way of specific data transport protocols which are appropriate to the mobile computing device and the mobile communications network operator. Examples of such technologies include (without limitation) session invitation protocol SIP, extensible messaging and presence protocol XMPP, and internet protocol multimedia services such as IMS as defined in the 3GPP standard.

The general idea of the session invitation protocols and extensible messaging and presence protocols to support user to user communications has been discussed and published in the standardisation and industry bodies such as IETF, 3GPP, ETSI and Java Community Process. In these schemes a software communications client runs on the mobile device and communicates back to a SIP proxy or instant messaging server. The messaging server may, for example, be the server 4.

A feature of messaging services is that most messages received by a user asynchronous, and on most occasions unsolicited. As a user does not know in advance what the content of the message is. Furthermore, there is no reason to presuppose that the user device has knowledge of or indeed can support the message in its native form. This is particularly true when the message is created using software which is newer than the release date of the mobile device.

The present invention provides a mechanism for the software device to upgrade its software when needed whilst also controlling the flow of data to the mobile device.

In an embodiment of the present invention the mobile device runs an SIP client which communicates with an SIP proxy for example executing on the server 4. The SIP protocol is used as carriage protocol to communicate the XML between the various nodes. A server 4, or indeed a further server such as server 20 may hold a database listing key attributes of the mobile device 2. These attributes will typically be a device unique identifier and a list of plug-ins and/or other software elements which have been installed on the device.

In use the SIP client on the mobile device 2 registers the SIP proxy 4 using a normal SIP register message.

The SIP client then subscribes to an Extensible Service Protocol (EXSP) application server 20 with an SIP subscribe message with an "event" field set to "EXS-protocol" and an accept field set to the MIME type "application/EXS-protocol". This action conforms to the SIP protocol, enables the EXSP application server to be notified that the client is software upgradeable and is currently available. The SIP subscribe message may include an EXS-protocol register message to notify the EXSP server of the capabilities of the device 2.

An exemplary register message is shown below:

```
       <Register>
           <User_Agent>
               ACME SIP Agent
           </User_Agent>
           <Protocol id="m2p_V1.2" uid="23fg546a432c" provider="Star
       Corp">
               M2P Protocol
           <Protocol>
           <Protocol id="BT-Authentication_V2.3" uid="1234fd32ac"
       provider="BT" >
           Authenticate Anywhere
           </Protocol>
       </Register>
```

The register message is marked up in XML style and hence the beginning of the message is denoted by the flag "<Register>" and the end of the message is denoted by "</Register>". This message has two protocol identifications. The first protocol identifies and "m2p" protocol provided by Star Corp and associated with an identification "m2p_V1.2" and a unique identifier. The second protocol is an "Authenticate Anywhere" protocol provided by BT (British Telecom) and having identification "BT-Authentication_V2.3" as a unique identifier. Thus the EXSP server is informed that the mobile device supports both of these protocols.

When a session invitation protocol Publish or Notify action containing the event type "EXS-protocol" arrives at the SIP proxy, from another network or server, such as server 6, then the message is sent to the EXSP server 20. The EXS-protocol includes details about the plug-in and protocol included within the published or notify event. An example of a header may be as follows:

```
       <Protocol id="BT-Authentication V2.4" uid="1234fd32ac"
       provider="BT">
           Authenticate Anywhere 2.4
       </Protocol>
       <Plugin >www.bt.com/clients/plugins/authenticate2.4<Plugin>
```

The EXSP application server can then compare the message protocols with the protocols that its database lists as being handled by the target device.

If the EXSP application server determines that the destination address is valid, a suitable device is online and that the protocol in question is identified as being supported by the device then the message is forwarded to the destination device. The EXSP server then returns an "accepted message" notification to the originator of the message for completion. The "event type" in the SIP header is changed to the name of the new protocol, for example m2p. The change of the event name is performed to reduce the need for the EXSP server to handle subsequent information flows between the two parties, i.e. server 4 and the mobile device 2. Likewise, once the originating party has received a message from the destination party then they can also change the event type to the new protocol name. This avoids unnecessary routing events through the EXSP server.

If, however, the address is valid, a suitable device is online but the protocol in question is not currently supported by that device then the EXSP server returns a provisional return code, such as "trying" is sent to the originating party. The EXSP server also sends a message to the client executing on the mobile device. The message may, for example, be an EXS-protocol "message waiting" element containing details such as the title, summary and location of the plug-in. An example of such a message is

```
       <Message_Waiting>
```

```
           <muid>324567890</muid>
           <time>Wednesday, 11 July 2007, 13:50:40</time>
               <Protocol id="BT-Authentication V2.4" uid="1234fd32ac"
       provider="BT">
               Authenticate Anywhere 2.4
           </Protocol>
           <Plugin >www.bt.com/clients/plugins/authenicate2.4<Plugin>
           <Summary>Not Available</Summary>
       <Message_Waiting>
```

This message gives the client sufficient information to make a decision on whether to install the plug-in. Depending on the client configuration settings, it may notify the user for example by a "popup" to ask the user to agree the installation of the plug-in. The client, assuming it receives authorisation from the user, then installs the plug-in by connecting to a web URL notified to it to install the software. Where the user device is capable of installing the software and the user agrees to this, then a message acknowledging that a message is waiting is sent to the EXSP server. An example of such a message is

```
       <Message_Waiting_Ack>
           <status>Installling</status>
           <muid>324567890</muid>
       </Message_Waiting_Ack>
```

The client "message_waiting_acknowledgement" message may be associated with a further status such installed, denied, or installing. Thus, upon receipt of a message_waiting_acknowledgement with a status "installed"

```
       <Message_Waiting_Ack>
           <status>Installed</status>
           <muid>324567890</muid>
       </Message_Waiting_Ack>
```

the EXSP server dispatches the original message to the client. At this point an "accepted" message is sent to the message originator.

It is thus possible for the delivery of messages to be delayed until such time as the receiving device has been upgraded in order to support the message or, alternatively, delivery of the message to be denied and such denial notified to the sender because the target device cannot support the protocols required to display the message.

A feature of the present invention is that it respects the user's security because they do not need to disclose to an untrusted third party the protocols that their device supports. The only entity which knows what software is stored on a particular terminal is the EXSP application server 20.

The EXSP server may maintain a list of devices owned by a user such that, for example, if one device is unable to accept the message it may then move to the next device on its list and so on in order to see if any of the devices associated with the user are suitable to accept the message.

Because the communication between the mobile device and the servers 4 and 20 is relatively loose because the devices are not in direct communication then the client and EXSP server may exchange heart beat messages in order to authenticate that each one is on line.

A user may deliberately decide to switch their mobile device off, and in which case the client sends an SIP unsubscription and bye message. The bye message ends the EXSP-protocol. Under such circumstances the SIP server is instructed to queue all messages that it subsequently receives. Thus, when the client subscribes and registers again he will be offered the ability to upgrade and receive any messages as appropriate.

Occasionally the mobile device is returned to a factory reboot setting and thus all of its plug-ins and records will be deleted. In such circumstances the EXSP server can be queried to obtain a list of all previous plug-ins and supported protocols such that they can be reinstalled. This function can be achieved through the <Protocol_Refresh_Request> request:

```
       <Protocol_Refresh_Response>
           <Protocol_Entry>
```

```
               <Protocol id="BT-Authentication V2.4" uid="1234fd32ac"
       provider="BT">
               Authenticate Anywhere 2.4
               </protocol>
               <Plugin >www.bt.com/clients/plugins/authenticate2.4<Plugin>
           </Protocol_Entry>
           <Protocol_Entry> .....
       </Protocol_Refresh_Response>
```

When this occurs the EXSP server assumes that the plugins and the capability of the device have been lost. As such the client sends a notification to the EXSP server to maintain integrity.

```
       <Plugin_Notification>
           <Protocol_Entry>
               <Protocol id="BT-Authentication V2.4" uid="1234fd32ac"
           provider="BT">
               <status>Installed</status>
               <Plugin >www.bt.com/clients/plugins/authenicate2.4<Plugin>
           </Protocol_Entry>
           <Protocol_Entry>.....
       </Plugin_Notification>
```

Likewise the status can be set to "Deleted" if for instance the plugin is removed.

In the case of the EXSP server sending a message to a client that cannot be handled (possibly due to the removal of a previously installed plug-in) then the client responds with a message protocol typically in the form of a 4XX message such as 404 not found or 415 media not supported. Such an error message triggers the EXSP application to begin the normal message_waiting procedure as described hereinabove and thereby to cause the receiving terminal to be offered an upgrade such that it can support the message.

It is thus possible to provide a simple and effective way of upgrading the mobile device.

It will be appreciated that many users can simultaneously use the same servers 4 and 20.

## Claims

1. A method of processing delivery of a software item to a user device being sent the software item, the method comprising the steps of:
a) maintaining a list of capabilities of a user device at a server remote from the user device;
b) upon receiving a request from a requestor to deliver a software item to the user device interrogating the server to see if the user device is currently capable of processing the software item; and
c) if the user device is not capable of processing the software item informing the user device that a software item that it cannot process is waiting or was requested to be delivered to it.

2. A method as claimed in claim 1, further comprising the step of identifying a software upgrade to enable the user device to process the software item.

3. A method as claimed in claim 2, in which a message identifying the software upgrade is displayed to the user, and the user is asked to authorise the upgrade being applied to the user.

4. A method as claimed in claim 2, in which the user device is informed of the software upgrade and automatically upgrades itself.

5. A method as claimed in any of the preceding claims, in which if the software item cannot be processed it is stored within a further server pending upgrade of the user device.

6. A method as claimed in any of the preceding claims, in which if the user device is not currently capable of processing the software item then a message is sent to the requestor.

7. A method as claimed in any of the preceding claims, further including a mail server arranged to receive requests to deliver software items to a user device and to request the server maintaining a list of capabilities of the user device to inform the mail server whether the software item can be delivered to the user device.

8. A method as claimed in any of the preceding claims, in which requests to deliver a software item to a target device include a list of protocols or applications required to process the software item.

9. An apparatus for processing delivery of a software item to a user device in response to a deliver request, the apparatus comprising:
a first server remote from the user device an arranged to hold a list of capabilities of the user device; and
a server arranged upon receiving a request to deliver a software item to the user device to interrogate the first server to see if the user device possesses software capable of processing the software item, and if the user device is not capable of processing the software item one of the first and second servers informs the user device that a request has been made to deliver a software item to it and that the user device needs an upgrade.

10. An apparatus as claimed in claim 9, in which one of the first and second servers is further arranged to identify a suitable upgrade and to offer it to the user device.

11. An apparatus as claimed in claim 9 or 10, in which if the user device is not capable of processing the software item one of the first and second servers is further arranged to send a message to a requestor that issued the delivery request to inform them that the software item cannot be processed or that delivery is delayed.
